# FASCICULE DE BREVET EUROPEEN

(11) **EP 0 907 541 B1**
(45) Date de publication et mention de la délivrance du brevet: **31.10.2001**
(21) Numéro de dépôt: 98921539.7
(22) Date de dépôt: 15.04.1998
(51) Int. Cl.: B62D 1/26, G05D 1/03

(54) **INSTALLATION DE TRANSPORT A GUIDAGE OPTIQUE ET MECANIQUE**
TRANSPORTEINRICHTUNG MIT OPTISCHER UND MECHANISCHER FÜHRUNG
TRANSPORT INSTALLATION WITH OPTICAL AND MECHANICAL GUIDING

(30) Priorité: 18.04.1997 FR 9704839
(43) Date de publication de la demande: 14.04.1999
(73) Titulaire: MATRA TRANSPORT INTERNATIONAL, 75016 Paris (FR); Matra Systèmes et Information, 78140 Vélizy Villacoublay (FR)
(72) Inventeur: FERBECK, Daniel, F-92130 Issy-Les-Moulineaux (FR); REBUFFET, Michel, F-92500 Rueil-Malmaison (FR)
(74) Mandataire: Fort, Jacques
(86) Numéro de dépôt international: FR9800758
(87) Numéro de publication internationale: WO9847754

(56) Documents cités:
- EP-A- 0 527 665
- DE-C- 4 002 113
- DE-C- 4 332 836
- DE-C- 4 407 726
- HANS-JOACHIM FÖRSTER: "Entwicklungsstand der O-Bahn von Daimler-Benz" ATZ AUTOMOBILTECHNISCHE ZEITSCHRIFT., vol. 83, no. 12, 1 décembre 1981, SCHWÄBISCH-GMÜND DE, pages 627-630, XP002051594
- PATENT ABSTRACTS OF JAPAN vol. 010, no. 064 (P-436), 14 mars 1986 & JP 60 205724 A (NIPPON DENKI KK), 17 octobre 1985,

## Description

La présente invention concerne les installations de transport en commun en site réservé ou "propre", comprenant une voie de circulation et des véhicules sur pneumatiques, dont l'essieu avant au moins est directeur. Elle trouve une application importante en milieu urbain et suburbain, pour des volumes de trafic inférieurs à ceux qui justifient des unités de transport de grande longueur.

On connaît déjà une telle installation, conforme au préambule de la revendication 1.

Le servo-moteur debraquage des roues est généralement un moteur électrique couple, de façon à permettre au conducteur de supplanter le guidage optique en cas de nécessité. Mais ce guidage optique ne garantit pas absolument la précision et la sécurité requises, en particulier à vitesse élevée.

On connaît par ailleurs (DE - C - 43 32 836) un véhicule, portant un dispositif de guidage sur voie ouverte, ayant un module de formation d'une image de la voie en avant du véhicule et d'exploitation de l'image par analyse et un module de guidage optique qui peut être mis en service pour commander l'orientation des roues de l'essieu directeur.

La présente invention vise notamment à fournir une installation de transport en commun du genre ci-dessus défini permettant de réduire l'emprise au sol de la voie là où c'est utile, de garantir le gabarit lorsque le guidage optique devient insuffisant et d'améliorer la sécurité du véhicule. Elle propose dans ce but une installation conforme à la partie caractérisante de la revendication 1.

Un ou des guides latéraux peuvent être prévus là où il est indispensable de réduire l'emprise de la voie et en particulier à vitesse élevée. Ailleurs, la voie peut être simplement matérialisée par des éléments au sol, tels que des bandes vibrantes ou ralentisseurs.

Le marquage longitudinal sera généralement prévu dans l'emprise de la trace du véhicule. Il peut notamment être prévu : à l'approche des stations, de sorte que le guidage réduise l'intervalle entre le quai (qui peut également constituer guide) et le plancher du véhicule ; là où une précision de guidage est importante, telle que les zones d'emperchage dans le cas d'une alimentation électrique par caténaire double et perche ; à l'approche des zones munies de guides latéraux, pour éviter un choc avec ces guides, puis pour la circulation entre ces guides.

Grâce au guidage optique, le contact des galets avec les guides latéraux peut être rendu exceptionnel dans les conditions de marche normale, en dehors des zones où la voie a un rayon faible et de celles où les guides latéraux sont rapprochés pour réduire encore l'emprise de la voie. Dans ces dernières zones, le guidage optique peut être neutralisé. Ce résultat peut être atteint en portant, sur la voie, des indications de fin de guidage et de début de guidage optique identifiables par le module d'exploitation d'image.

En dehors des zones de faible rayon ou de guidage resserré, les galets auront un contact avec les guides exceptionnel, ce qui réduit l'usure du matériel roulant. Néanmoins, ce guide améliore la sécurité partout où il est prévu, notamment en cas d'incident, tel que crevaison d'un pneu et en cas de freinage d'urgence pouvant provoquer un dérapage.

Des marques s'ajoutant à celles constituant la référence peuvent être prévues sur la voie de circulation, portant des informations relatives au déplacement longitudinal du véhicule. Elles sont décodées et communiquées au conducteur par des moyens acoustiques ou visuels ou tout autre dispositif de transmission d'information.

Les caractéristiques ci-dessus ainsi que d'autres apparaîtront mieux à la lecture de la description qui suit d'un mode particulier de réalisation, donné à titre d'exemple non limitatif. La description se réfère aux dessins qui l'accompagnent, dans lesquels :
- la figure 1 est une vue de dessus schématique, destinée à faire apparaître la constitution d'une fraction de la voie de circulation et d'éléments de guidage portés par le véhicule ;
- la figure 2 est un schéma synoptique montrant les modes de fonctionnement et les passages de l'un à l'autre ;
- la figure 3 est un schéma synoptique montrant les différentes fonctions du dispositif de guidage et des paramètres qui interviennent dans la mise en oeuvre.

L'installation de transport suivant l'invention comporte une voie de circulation, en site affecté ou propre dans certaines zones au moins. L'un des avantages de l'invention est de permettre au véhicule de parcourir des zones en conduite libre, c'est-à-dire uniquement sous la commande du conducteur. Dans ces parties du réseau, aucun équipement de la voie n'est nécessaire en dehors des protections éventuelles telles que bandes vibrantes ou plots.

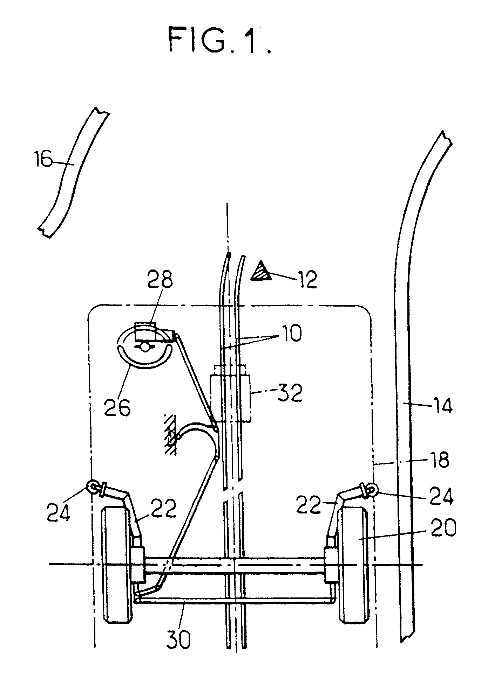

Sur la majeure partie du tracé de la voie, cette dernière est munie d'un tracé de référence au sol, généralement dans l'axe du parcours nominal du véhicule. Dans le cas illustré sur la figure 1, ce tracé de référence est constitué de deux lignes parallèles 10 interrompues à intervalles réguliers, choisis de façon à éviter une confusion avec le marquage de signalisation au sol. D'autres types de marquages sont envisageables, y compris à l'aide de marques réfléchissantes, ce qui implique alors une illumination à partir du véhicule. Les tracés de référence sont interrompus dans les zones où le guidage optique n'est plus nécessaire ou n'est plus possible. En règle générale, les interruptions et les reprises du guidage optique seront indiquées par une marque au sol, telle que celle indiquée en 12 sur la figure 1.

Les zones où est prévu un guidage mécanique comportent généralement deux guides latéraux 14 et 16. Exceptionnellement, un seul guide latéral 14 ou 16 peut être prévu localement. Le guide peut être constitué par une bordure ayant une vingtaine de centimètres de hauteur. Dans les stations, il peut être constitué par le quai lui-même. Pour assurer un guidage satisfaisant, la tolérance de positionnement de guide est de l'ordre de 1 cm et les dévers doivent être réduits.

Les véhicules 18 destinés à circuler sur la chaussée ont une constitution générale similaire à celle d'un trolley bus. En effet, l'absence de rails métalliques rend cette disposition souhaitable, pour éviter d'avoir à implanter des conducteurs de retour au sol. Les véhicules peuvent être de type standard ou articulés, préférentiellement à un seul essieu directeur pour des raisons de simplicité. La figure 1 montre un tel essieu avant directeur, comportant des roues à pneumatique 20. Les fusées de l'essieu sont munies chacune d'un bras palpeur 22 portant un galet 24 tournant autour d'un axe vertical. Ces bras provoquent un braquage forcé des roues avant en cas de contact avec un guide.

Les moyens de guidage manuel du véhicule peuvent être classiques et comporter un volant 26 attaquant le boîtier de servo-direction 28 relié par une tringlerie à la fusée d'une des roues. Un barre d'accouplement 30 provoque le braquage simultané des deux roues.

Le véhicule porte de plus au moins une caméra 32 visant le sol à l'avant du véhicule et fournissant une image du tracé de référence. Cette caméra doit avoir un champ angulaire suffisant pour fournir des indications même en courbe, du moins aussi longtemps que ie rayon de la courbe est compatible avec le guidage optique.
Au-dessous d'une valeur limite du rayon de courbure, le guidage optique peut être neutralisé. Il peut également être neutralisé en des emplacements particuliers de la voie.

Dans des zones spécifiques, par exemple là où le gabarit est particulièrement réduit, deux guides 14 et 16 séparés d'une distance légèrement inférieure à l'écartement entre les galets 24 (qui dans ce cas doivent être précontraints) sont prévus. Dans ce cas encore, le guidage optique peut être neutralisé et les galets sont en permanence en contact avec les guides. La neutralisation peut être commandée par la détection d'une marque 12 au sol.

Pour tenir compte de ces modes d'utilisation, des galets montés sur des bras palpeurs sont en général prévus sur tous les essieux de façon à maintenir les roues écartées des guides.

On peut considérer que l'installation est prévue pour avoir trois modes principaux de fonctionnement, suivant l'emplacement du véhicule sur la voie :
- conduite manuelle dans les parties du trajet démunies de guides et de tracé de référentiel,
- guidage optique, en présence du tracé de référentiel, lorsque le rayon de courbure de la voie dépasse une valeur limite,
- guidage en appui mécanique des galets sur un des guides, ou les deux, dans les zones étroites ou en courbe prononcée.

Le véhicule est prévu de façon que le conducteur puisse, par action sur le volant, s'écarter de la consigne donnée par les moyens de guidage optiques, par exemple lorsqu'il constate une dérive due à un incident ou lorsqu'il veut s'écarter du trajet nominal dans des portions où le site n'est pas réservé. Le guidage par appui mécanique a prépondérance sur les deux autres.

Dans tous les cas, le conducteur garde la maîtrise du démarrage, de l'accélération, des manoeuvres dans des zones de retournement du véhicule, de freinage et d'arrêt. Toutefois une régulation de vitesse peut être prévue.

Le guidage optique est prévu non seulement là où il n'y a pas de guide, mais aussi lors de l'accostage avec rapprochement du quai en station, le quai constituant guide à droite. Le redémarrage à partir de la station peut s'effectuer également en guidage optique.

Le guidage en appui mécanique est systématique lors de la phase finale d'accostage en station et dans les parties resserrées ou en courbe prononcée, l'appui pouvant se faire sur un seul guide ou sur deux guides.

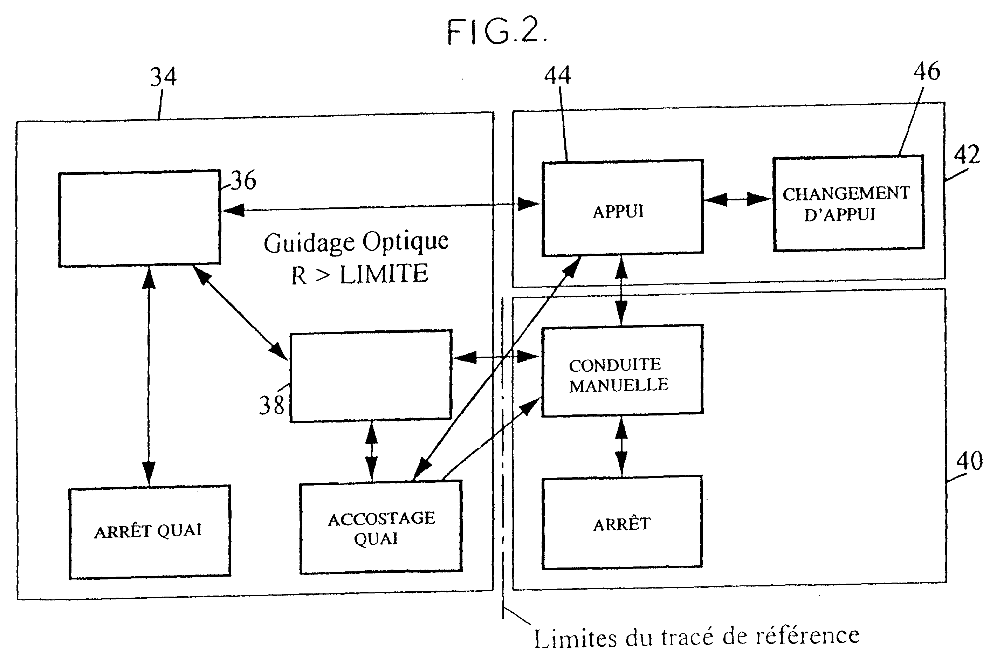

Les transitions entre les modes de guidage sont schématisées sur la figure 2. Le mode de guidage optique 34 peut exister aussi bien entre guides, comme indiqué en 36, que sans guide, comme indiqué en 38. La manoeuvre d'accostage en station au quai peut se faire avec appui sur un seul guide. L'arrêt sera généralement entre deux guides.

La conduite manuelle, indiquée en 40, sans guide ni guidage optique, a lieu dans toutes les zones démunies d'équipement. Cette conduite libre comporte également l'arrêt du véhicule, qui est commandé uniquement par le conducteur.

Au cours du guidage mécanique 42, l'appui peut se faire sur un seul guide, comme indiqué en 44, ou avec des changements d'appui, comme indiqué en 46, en cas notamment de virages successifs de sens opposés.

Des états transitoires interviennent lors de la détection de début ou de fin du tracé de référentiel du guidage optique, lors de l'entrée entre guides, et lors de la reprise en mains pour la conduite libre avec inhibition du guidage optique, en l'absence de guide ou à basse vitesse.

Les véhicules comporteront en général un moteur électrique de propulsion sur chaque essieu ou chaque roue, ce qui permet d'abaisser sensiblement la hauteur des planchers.

La ligne aérienne d'amenée du courant peut être interrompue à divers endroits, par exemple dans des accès au garage et lors du croisement de lignes. Dans ce cas le véhicule doit comporter une source autonome d'énergie, par exemple un alternateur entraîné par un moteur thermique ou une batterie d'accumulateurs de capacité suffisante. Grâce au guidage optique, le ré-emperchage après une lacune de la ligne d'alimentation électrique peut être très facilité.

Il est encore possible d'utiliser des véhicules fonctionnant en permanence à l'aide d'une source propre telle qu'un moteur thermique entraînant un alternateur, mais cette solution sera généralement écartée, car plus polluante.

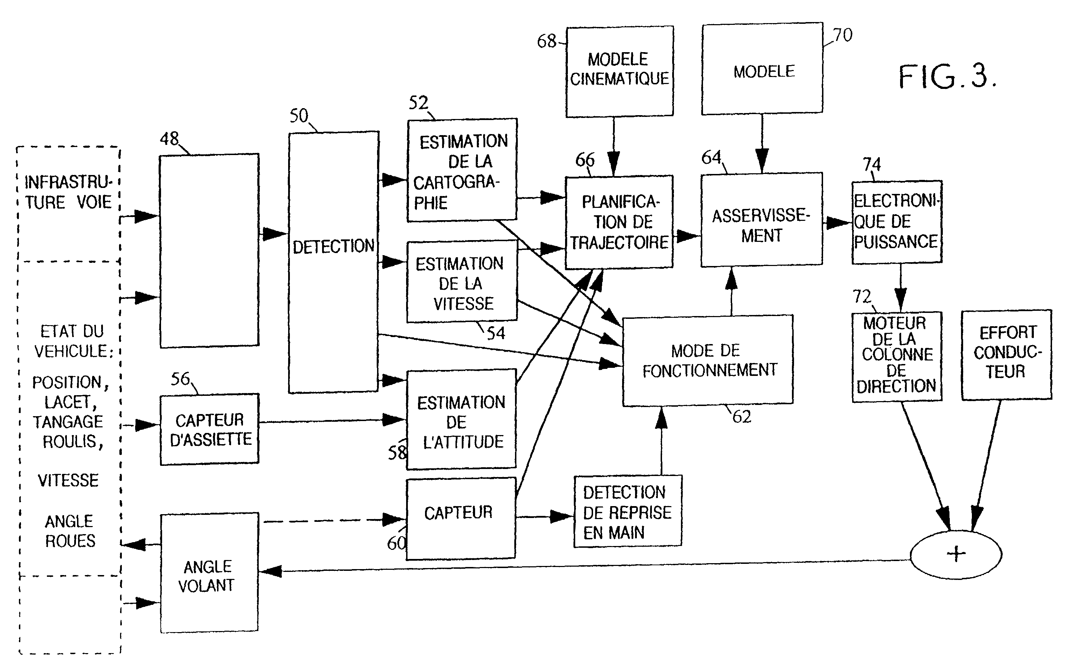

Le synoptique de fonctionnement de l'installation peut par exemple être celui schématisé en figure 3. Un dispositif de formation d'image 48 comporte la caméra 32 et des moyens permettant de corriger l'image en tenant compte de l'attitude du véhicule. La caméra pourra notamment être une caméra CCD permettant de former une image de la zone de la chaussée située en avant du véhicule jusqu'à 30 à 50 mètres de distance. Un champ large, habituellement supérieur à 60°, sera en général nécessaire pour tenir compte des courbes en avant du véhicule.

La caméra peut être munie d'un filtre polarisant pour réduire les réflexions spéculaires sur la chaussée.

Celle-ci peut porter des tracés de référentiel matérialisés par des plots simplement réflecteurs. Il faut alors les éclairer à partir du véhicule. Cet éclairage peut être fait dans le domaine visible ou proche infra-rouges par des impulsions synchrones avec l'ouverture de la caméra. Dans ce cas la durée d'exposition peut être courte, inférieure à 100 µsec et la caméra peut être dotée d'un filtre à bande étroite centrée sur la longueur d'onde de l'éclairage, qui peut être assuré par une diode laser. Si, au lieu d'utiliser des bandes claires, on utilise des plots lumineux ayant une émission dans une bande étroite, la caméra peut être munie d'un filtre optique étroit centré sur la longueur d'onde d'émission.

Les tracés de référence sont identifiés par un circuit 50 et le tracé est restitué sous forme numérique à des circuits 52 d'estimation de la cartographie du tracé au sol (y compris les courbures horizontale et verticale) et 54 d'estimation de la vitesse du véhicule. Les estimations successives de la vitesse permettent également de calculer l'accélération. Les variations de l'angle du tracé au sol permettent de calculer la vitesse transversale. Un capteur d'assiette 56 fournit un signal permettant à un circuit supplémentaire 58 d'estimer la position en lacet, en tangage et en roulis du véhicule, en tenant compte des informations fournies par le circuit de détection 50. Le capteur d'assiette peut être constitué par un inclinomètre placé sur une partie suspendue et une partie non suspendue du véhicule.

Enfin la position du volant est mesurée par un capteur 60. L'analyse des variations de l'angle mesuré permet également de détecter une reprise en mains par le conducteur, du fait de la divergence entre un angle de consigne et l'angle effectif.

La boucle d'asservissement 64 utilise un modèle 70 du moteur 72 de la colonne de direction et de la cinématique de direction et la planification de trajectoire fournie par le circuit 66 pour élaborer la commande de l'électronique de puissance 74 actionnant le moteur couple 72 de la colonne de direction.

La boucle d'asservissement peut être d'un type classique, visant à rallier une consigne de suivi du tracé au sol par un point déterminé du véhicule, qui peut être situé entre les essieux. Cet asservissement prend en compte l'écart entre la consigne et létat courant du véhicule, c'est-à-dire sa position et son attitude, et peut tenir compte également de la vitesse et de l'accélération.

Cette boucle d'asservissement 64 doit avoir une fréquence qui est au plus égale à la fréquence d'estimation de la géométrie de la voie à partir des images successives fournies par le dispositif 48 et l'estimation des paramètres d'état du véhicule.

La direction reçoit d'une part le couple exercé par le moteur de la colonne de direction, d'autre part le couple exercé par le conducteur, appliqué au volant ; ces couples s'additionnent. Dans les stations où le conducteur doit pouvoir reprendre en main la direction du véhicule, le couple maximal appliqué par la moteur 72 doit rester inférieur à celui qu'un conducteur normal est capable d'appliquer.

Le dispositif peut être complété par des moyens de déclenchement d'une alarme visuelle ou sonore en cas de dépassement d'une vitesse limite fonction du type de guidage ; des repères peuvent être placés à côté du tracé de référence et indiquer des vitesses limite ; lorsqu'elles sont dépassées, les circuits de bord peuvent provoquer également une alarme.

Bien qu'il ait été question surtout de "circuits" dans la description qui précède, il doit être entendu que beaucoup des fonctions envisagées seront en pratique implémentées par voie logicielle, à l'aide d'un ou de plusieurs processeurs et/ou calculateurs. Dans ce dernier cas, le calculateur peut également être multi-tâches et remplir d'autres fonctions.

Le capteur permet également de mesurer la vitesse de rotation de la colonne de direction et d'utiliser en aval un asservissement non proportionnel.

A partir des informations fournies par les composants 50, 52, 54 et 60, le mode de fonctionnement effectif peut être déterminé par un circuit 62 qui déterminera ou non s'il doit y avoir intervention d'un circuit d'asservissement 64. L'asservissement doit tendre à servir le véhicule à une trajectoire déterminée, établie par un circuit 66 à partir des informations reçues des circuits 52, 54, 58 et 60 et d'un modèle cinématique simple 68 du véhicule.

## Revendications

1. Installation de transport en commun comprenant une voie de circulation dont certains tronçons au moins sont munis d'un marquage longitudinal (10) de référence pour la trajectoire nominale et de véhicules dont chacun porte un ensemble de guidage par commande de l'essieu directeur, ayant un module (48) de formation d'une image de la voie en avant du véhicule et d'exploitation de l'image du marquage et un module de guidage optique calculant l'orientation à donner aux roues de l'essieu directeur pour suivre la trajectoire nominale et un servo-moteur de braquage commandé par le module de guidage,
**caractérisée en ce que** la voie porte, au moins sur certains tronçons, des guides latéraux (14, 16) et **en ce que** les véhicules (18), dont l'essieu avant au moins est directeur, sont munis, sur chaque essieu, de galets (24) d'axe vertical destinés à s'appuyer sur les guides (14, 16) en cas d'écart excessif par rapport à une trajectoire nominale sur la voie.

2. Installation selon la revendication 1, **caractérisé en ce que** les galets (24) équipant l'essieu avant sont montés sur des bras (22) d'orientation forcée des roues (20) dudit essieu avant.

3. Installation selon la revendication 1 ou 2, **caractérisée en ce que** le véhicule (18) comporte un organe de direction. manuelle (26) à action complémentaire à celle du module de guidage optique.

4. Installation selon la revendication 1, 2 ou 3, **caractérisée en ce que** le marquage (10) est prévu au moins à l'approche des stations de chargement de passagers et en station.

5. Installation selon la revendication 4, **caractérisé par** des marques supplémentaire (12) sur la voie de circulation indiquant le début de chaque zone de mise en oeuvre du module de guidage.

6. Installation selon la revendication 4 ou 5, **caractérisé en ce que** des marques supplémentaires sont prévues sur la voie de circulation portant des informations relatives au déplacement longitudinal du véhicule et **en ce que** les véhicules sont munis de moyens pour décoder les informations et les communiquer au conducteur par des moyens acoustiques ou visuels ou tout autre dispositif de transmission d'information.

7. Installation de transport selon la revendication 1, **caractérisée en ce que** le véhicule comporte un moteur électrique par essieu ou par roue, alimenté par une source de courant.

8. Installation selon la revendication 7, **caractérisé en ce que** la source de courant est constituée par une alimentation aérienne principale par perche double et, en cas de perte d'alimentation, par une source autonome telle qu'une batterie d'accumulation embarquée ou un alternateur entraîné par moteur thermique.

9. Installation selon l'une quelconque des revendications 1 à 8, **caractérisée par** des moyens pour neutraliser le guidage optique en cas de détection d'un rayon de courbe inférieur à un seuil déterminé.

10. Installation selon l'une quelconque des revendications 1 à 9, **caractérisée en ce que** le marquage de référence est constitué d'un motif constitué par une répétition de motifs parallèles sous forme de bandes ou de plots rétrodiffusants.

## Patentansprüche

1. Öffentliche Transporteinrichtung, die eine Verkehrsspur, welche zumindest in bestimmten Abschnitten mit einer längs verlaufenden Referenzmarkierung (10) für die nominale Trajektorie (Soll-Linie) versehen ist, und Fahrzeuge aufweist, von denen jedes eine Anordnung zur Führung mittels Steuerung der Lenkachse, wobei die Anordnung ein Modul (48) zur Erzeugung eines Bildes der Spur vor dem Fahrzeug und zur Auswertung des Bildes der Markierung und ein Modul zur optischen Führung hat, das die Richtung berechnet, die den Rädern der Lenkachse zu geben ist, um der nominalen Trajektorie zu folgen, und einen von dem Führungsmodul gesteuerten Radeinschlag-Hilfsmotor trägt,
**dadurch gekennzeichnet, daß** die Spur zumindest auf bestimmten Abschnitten seitliche Führungen (14,16) trägt und daß die Fahrzeuge (18), bei denen zumindest die Vorderachse Lenkachse ist, auf jeder Achse mit Führungsrollen (24) mit vertikaler Achse versehen sind, die dazu bestimmt sind, um im Falle einer zu großen Abweichung in bezug auf eine nominale Trajektorie auf der Spur gegen die Führungen (14,16) zu drücken.

2. Einrichtung nach Anspruch 1, **dadurch gekennzeichnet, daß** die Führungsrollen (24), mit denen die Vorderachse ausgestattet ist, auf Armen (22) für eine Zwangsausrichtung der Räder (20) der Vorderachse angebracht sind.

3. Einrichtung nach Anspruch 1 oder 2, **dadurch gekennzeichnet, daß** das Fahrzeug (18) ein manuelles Lenkteil (26) mit einer die Funktion des Moduls der optischen Führung ergänzenden Funktion aufweist.

4. Einrichtung nach Anspruch 1, 2 oder 3, **dadurch gekennzeichnet, daß** die Markierung (10) zumindest in der Nähe von Fahrgastaufnahmestationen und an der Station vorgesehen ist.

5. Einrichtung nach Anspruch 4, **gekennzeichnet durch** zusätzliche Markierungen (12) auf der Verkehrsspur, die den Anfang jeder Zone des Wirksamwerdens des Führungsmoduls anzeigen.

6. Einrichtung nach Anspruch 4 oder 5, **dadurch gekennzeichnet, daß** zusätzliche Markierungen auf der Verkehrsspur vorgesehen sind, die Informationen in bezug auf die Fortbewegung des Fahrzeugs in Längsrichtung tragen, und dadurch, daß die Fahrzeuge mit Mitteln versehen sind, um die Informationen zu dekodieren und sie mit akustischen oder optischen Mitteln oder mit irgendeiner anderen Informationsübermittelungsvorrichtung an den Führer zu übermitteln.

7. Transporteinrichtung nach Anspruch 1, **dadurch gekennzeichnet, daß** das Fahrzeug einen elektrischen Achs- oder Radmotor aufweist, der von einer Stromquelle versorgt wird.

8. Einrichtung nach Anspruch 7, **dadurch gekennzeichnet, daß** die Stromquelle aus einer Hauptversorgungsoberleitung aus doppeltem Stromabnehmer und, im Falle eines Stromausfalls, aus einer autonomen Quelle, wie beispielsweise einer mitgeführten Akkumulatorbatterie oder einem von einem thermischen Motor angetriebenen Wechselstromgenerator besteht.

9. Einrichtung nach einem der Ansprüche 1 bis 8, **gekennzeichnet durch** Mittel, um im Falle einer Detektion eines Kurvenradius unterhalb eines bestimmten Schwellenwerts die optische Führung unwirksam zu machen.

10. Einrichtung nach einem der Ansprüche 1 bis 9, **dadurch gekennzeichnet, daß** die Referenzmarkierung aus einem Motiv besteht, das aus einer Wiederholung von parallelen Motiven in Form von reflektierenden Bändern oder Markierungsnägeln besteht.

## Claims

1. A public transport installation comprising a roadway at least some segments of which are provided with longitudinal reference marking (10) for a nominal path, and vehicles, each of which carries a guidance assembly that operates by controlling a steering axle, the assembly including a module (48) for forming an image of the road ahead of the vehicle and for processing the image of the marking, and an optical guidance module for calculating the angle to be given to the wheels of the steering axle to cause the nominal path to be followed, and a steering servo-motor controlled by the guidance module,
**characterized in that** at least certain segments of the roadway carry lateral guides (14,16), and **in that** the vehicles (18), whose front axles at least are steering axles, are provided on each axle with vertical-axis guide wheels (24) designed to press against the guides (14,16) in the event of the vehicle having an excess deviation from a nominal path on the road.

2. An installation according to claim 1, **characterized in that** the guide wheels (24) fitted to the front axle are mounted on arms (22) for imparting forced steering to the wheels (20) of said front axle.

3. An installation according to claim 1 or 2, **characterized in that** the vehicle (18) includes a manual steering member (26) that acts in addition to the action of the optical guidance module.

4. An installation according to claim 1, 2, or 3, **characterized in that** the marking (10) is provided at least in the approaches to stations for passenger embarkation, and in the stations themselves.

5. An installation according to claim 4, **characterized in that** additional marks (12) are provided on the roadway to indicate the beginning of each zone in which the guidance module can be used.

6. An installation according to claim 4 or 5, **characterized in that** additional marking is provided on the roadway bearing information relating to longitudinal displacement of the vehicle, and **in that** the vehicles are provided with means for decoding the information and for informing the driver by audible means, or visual means, or any other device for transmitting information.

7. A transport installation according to claim 1, **characterized in that** the vehicle has one electric motor per axle or per wheel, which motor is powered by an electricity source.

8. An installation according to claim 7, **characterized in that** the electricity source is constituted by a main overhead power line via a pair of poles, and in the event of power supply being lost, by an independent source such as an on-board storage battery or an alternator driven by an engine.

9. An installation according to any one of claims 1 to 8, **characterized by** means for disabling the optical guidance if a radius of curvature is detected that is smaller than a determined threshold.

10. An installation according to any one of claims 1 to 9, **characterized in that** the reference marking is constituted by a pattern constituted by repeated parallel patterns in the form of retroreflecting studs or strips.
